# EUROPEAN PATENT SPECIFICATION

(11) **EP 2 276 115 B1**
(45) Date of publication and mention of the grant of the patent: **06.01.2016**
(21) Application number: 10008199.1
(22) Date of filing: 03.06.2005
(51) Int. Cl.: H01Q 1/27, H01Q 1/46, H01Q 9/16, H04R 1/10

(54) **Earphone antenna and portable radio equipment provided with earphone antenna**
Kopfhörerantenne und tragbares Funkgerät ausgestattet mit der Kopfhörerantenne
Ecouteur fonctionnant comme antenne et dispositif radio équipé de cet écouteur

(30) Priority: 04.06.2004 JP 2004167551
(43) Date of publication of application: 19.01.2011
(62) Divisional of application: 05012038.5
(73) Proprietor: Sony Corporation, Tokyo 108-0075 (JP)
(72) Inventor: Yoshino, Yoshitaka, Tokyo 108-0075 (JP)
(74) Representative: Müller Hoffmann & Partner

(56) References cited:
- WO-A-03/026342
- GB-A- 2 382 722
- US-A- 3 720 874
- US-A- 4 369 521
- US-A- 5 361 405

## Description

### CROSS REFERENCE TO RELATED APPLICATION

The present invention contains subject matter related to Japanese Patent Application No. JP2004-167551 filed in the Japanese Patent Office on June 4, 2004.

### BACKGROUND OF THE INVENTION

### 1. Field of the Invention

The present invention relates to an earphone antenna for portable radio equipment put on a human body at use, and portable radio equipment provided with this earphone antenna.

### 2. Description of Related Art

Conventionally, in portable radio equipment such as a pager, a radio receiver, an LCD television receiver and the like, to be carried on a human body at use, a rod antenna and an earphone antenna which utilizes a signal wire for transmitting audio signal to earphones is used as an antenna. For example, such a earphone antenna is disclosed in Japanese Patent Application Publication No. 2003-163529

In the portable radio equipment which uses a rod antenna and/or an earphone antenna, when at use by putting on a human body, there was a problem that because of a significant deterioration of antenna performance when put on the human body, in such a case as television broadcasts where signals of a large amount of information, e.g., video signals, are to be processed, a sufficient reception sensitivity cannot be obtained.

In particular, the earphone antenna which utilizes the signal wire for transmitting audio signal to earphones as an antenna had such a problem that because the earphone and the signal wire make direct contact with the human body, it allowed the human body to cause a significant influence on radio equipment via the antenna and deteriorate stability of reception substantially.

Further, in television broadcasts in Japan, for example, VHF bands from 90 to 108 MHz (1-3 channels) and from 170 to 222 MHz (4-12 channels), as well as UHF band from 470 to 770 MHz (13-62 channels) are used, therefore, an LCD television receiver for receiving the television broadcasts is required to receive high frequency signals in an extremely wide band range from 90 to 770 MHz, thereby with a conventional rod antenna or earphone antenna the performance of which is inferior to a fixed-type antenna, there was a problem that it was extremely difficult to secure a sufficient sensitivity in the frequency band range required.

Still further, because the rod antenna and the earphone antenna is a monopole antenna which resonates at λ/4, its reception sensitivity is greatly influenced by a ground size of a portable radio terminal, thereby limiting the design of the portable radio equipment.

Document WO 03/026342 A relates to a headphone and discloses a receiver assembly comprising a housing, a receiver unit, and having left and right audio stereo output lines which connect to a connection for connection to a headphone, each of left and right lines having an impedance in series and also having a capacitance connecting the left and right audio lines, said capacitance being located at a point between the connector and a non-output side of the inductance, wherein the receiver unit and the audio lines are connected via an inductance. The impedance is high at RF but low at audio frequencies. A coaxial cable may be used for the lines.

Furthermore, document US-A-3 720 874 relates to a dipole antenna arrangement for radio with separate speaker-microphone assembly. The speaker-microphone assembly, used with a portable radio unit containing receiving and transmitting equipment for receiving and transmitting radio signals, includes a housing with a helical antenna element mounted on the top wall to form one element of a dipole antenna. A coaxial cable having inner and outer conductors is connected from the portable unit equipment to the speaker microphone housing. The centre conductor is connected to the helical antenna and the outer conductor is terminated in the housing at a first point which is ground potential, A second outer conductor surrounds and is insulated from the first outer conductor, and is connected to the first outer conductor at the first point. The second outer conductor extends for a predetermined length along the first outer conductor to form the other element of the dipole antenna.

### SUMMARY OF THE INVENTION

The present invention is contemplated to solve the aforementioned problems associated with the conventional art, and it is desirable to provide an earphone antenna which is capable of reducing the influence of the human body to achieve a high gain in a wide band range, and also provide portable radio equipment which secures reception stability.

According to the present invention, the above object is achieved by the matter according to the independent claims.
Further developments of the invention are subject of the accompanying dependent claims.

According to the earphone antenna of an embodiment of the present invention, because the transmission path for audio signals is formed by connecting the first shield wire of the coaxial cable to the ground in the connection block described above, connecting the central conductor of the coaxial cable to one of the first signal lines of the earphone cables, and connecting to the other one of the first signal lines of the earphone cables via a capacitor which becomes high impedance in the frequency range of audio signal and low impedance in the frequency range of high frequency signal, then by connecting the second signal lines for audio signal and ground wiring respectively to the first signal lines of the two earphone cables via a high frequency choke which becomes low impedance in the frequency range of audio signal and high impedance in the frequency range of high frequency signal, and wherein because the sleeve antenna composed of the earphone cables described above and the shield wire which covers the external of the coaxial cable, the second signal lines for audio signal and the ground wiring is provided by connecting the aforementioned ground to the second shield wire which covers the external of the coaxial cable, the second signal lines for audio signal and the ground wiring, it is enabled to reduce the influence of the human body and obtain a high gain over a wide range of frequency band.

An earphone antenna according to an embodiment of the present invention may be provided with, for example, stereophonic earphones which are connected to the aforementioned connection block via a pair of earphone cables, and a high frequency choke inserted in a portion en route to one or both of the earphone cables to alter a resonance frequency between the earphone cables or make it variable.

Further, the earphone antenna according to an embodiment of the present invention may be provided with a microphone and a switch for switching mounted in the aforementioned connection block.

Still further, the earphone antenna according to an embodiment of the present invention may be provided with an amplifier mounted in the aforementioned connection block.

In portable radio equipment according to an embodiment of the present invention, in the connection block described above, a transmission path for audio signal is formed by connecting the first shield wire of the coaxial cable to the ground, connecting the central conductor of the coaxial cable to one of the first signal lines of the earphone cable and to the other one of the first signal lines of the earphone cables via a capacitor which becomes high impedance in the frequency band of audio signal and low impedance in the frequency range of high frequency signal, as well as by connecting the second signal line for audio signal and the grounding wire respectively to the pair of first signal lines of the earphone cable via the high frequency choke which becomes low impedance in the frequency range of audio signal and high impedance in the frequency range of high frequency signal, and wherein an earphone antenna, which is a sleeve antenna composed of the earphone cable and the shield wire which covers the external of the coaxial cable, the second signal line and the grounding wire, is formed by connecting the ground to the second shield wire which covers the external of the coaxial cable, the second signal lines for audio signal and the grounding wire, with the earphone antenna being connected to the main body of the radio equipment via the multi-pin connector, thereby enabling to secure stable reception over the wide band range.

Further features of the invention, and the advantages offered thereby, are explained in detail hereinafter, in reference to specific embodiments of the invention illustrated in the accompanying drawings.

### BRIEF DESCRIPTION OF THE DRAWINGS

FIG. 1 is a block diagram showing a configuration of an LCD television receiver according to the embodiment of the present invention;
FIG. 2 is a diagram showing a configuration of a pin-jack connector for connecting between a main body of the receiver and an earphone antenna in the LCD television receiver described above,
FIG. 3 is a block diagram showing a configuration of the main body of the receiver;
FIG. 4 is a diagram showing a configuration of a shield cable which constitutes the earphone antenna described above;
FIG. 5 is a diagram showing a configuration of a connection block which constitutes the earphone antenna;
FIG. 6 is a schematic circuitry diagram showing an electrical configuration of the earphone antenna;
FIG. 7 is a schematic circuitry diagram showing an electrical configuration of an earphone antenna incorporating a function of microphone in the connection block;
FIG. 8 is a schematic circuitry diagram showing an electrical configuration of an earphone antenna incorporating an amplifier in the connection bloc; and
FIG. 9 is a diagram showing another exemplary configuration of an earphone antenna according to the present invention.

### DESCRIPTION OF THE PREFERRED EMBODIMENTS

A preferred exemplary embodiment of the present invention will be described in detail by referring to the accompanying drawings in the following. However, it should be understood that the present invention is not limited thereto, and many changes and modifications thereof can be contemplated within the scope of the present invention.

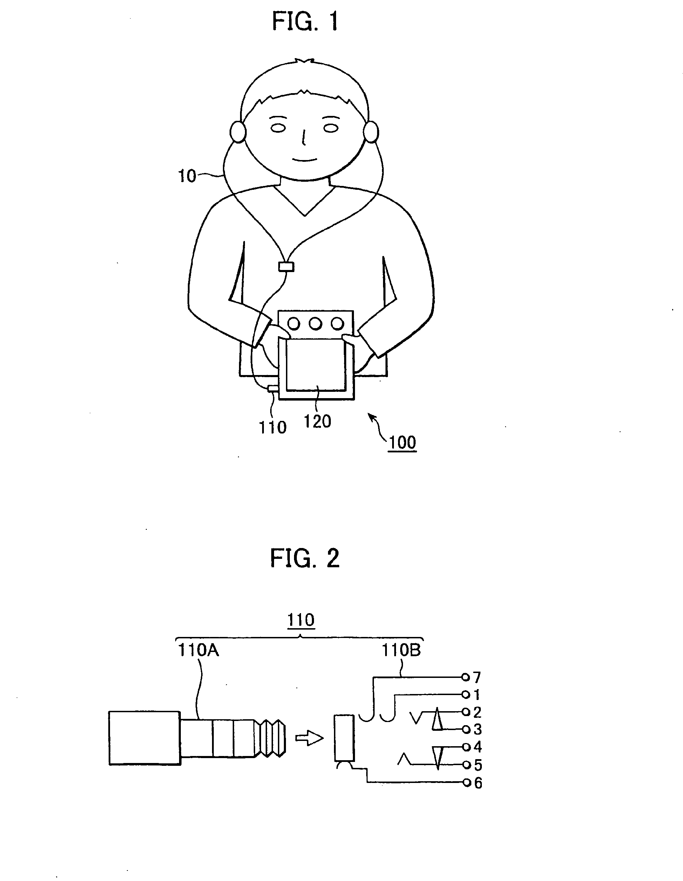

The present invention is applicable to, for example, an LCD television receiver 100 shown in FIG. 1.

In this liquid crystal display television receiver 100 shown in FIG. 1, an earphone antenna 10 according to the embodiment of the present invention is connected to a main body of the receiver 120 via a pin jack connector 110.

The pin jack connector 110, as shown in FIG. 2, is composed respectively of a five-electrode pin 110A and a jack 110B, to which five kinds of lines, i.e., antenna 7, headphone detection 1, audio L channel 2, audio R channel 5, and ground 6 are connected.

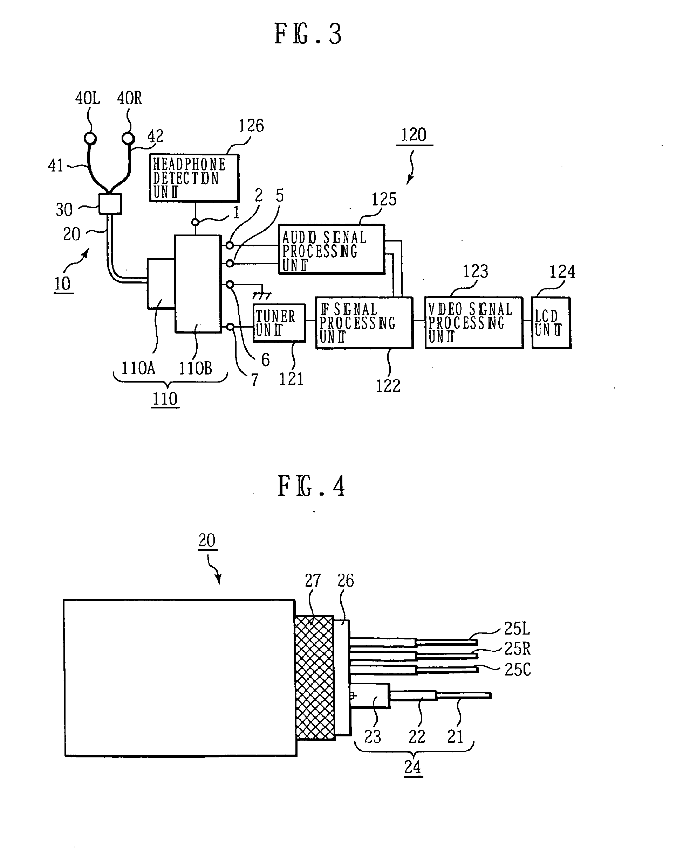

In a main body of the receiver 120, as shown in FIG. 3, there are provided a tuner unit 121, an IF signal processing unit 122 connected to the tuner 121, a video signal processing unit 123, an audio signal processing unit 125 both connected to the IF signal processing unit 122, a liquid crystal display unit 124 connected to the video signal processing unit 123, and a jack 110B which constitutes the pin jack connector 110 described above.

In this LCD television receiver 100, the jack 110B described above has five movable terminals 1, 2, 5, 6, 7 and two fixed terminals 3, 4 as shown in FIG. 2, wherein, as shown in FIG. 3, the movable terminal 7 is connected to the tuner unit 121 as an antenna terminal 7, and the movable terminals 2, 5 are connected to the audio signal processing unit 125 as audio L channel terminal 2 and audio R channel terminal 5. And the headphone detection terminal 1 is connected to a headphone detection unit 126. Movable terminal 6 is connected to GND of a substrate in the main body of the radio equipment as a common ground terminal (Gnd) of the radio equipment. Fixed terminals 3, 4 are terminals for firmly holding the pins. An earphone antenna 10 is comprised of a shield cable 20 one end of which is connected to the main body of the receiver 120 via the five pin jack connector 110 described above, a connection block 30 which is connected to the other end of the shield cable 20, and stereophonic earphones 40L, 40R which are connected to this connection block 30 via two earphone cables 41, 42.

By way of example, although not shown here, normally there is inserted a capacitor with approximately 1000pF capacitance between the movable terminal 7 and the tuner unit 121 for protection of breakdown.

As shown in FIG. 4, the shield cable 20 is comprised of a coaxial cable 24 which has a central conductor 21 for transmitting a high frequency signal, which is coated with an insulator 22 and further covered with a shield wire 23; signal lines 25L, 25R for audio signal which are insulation-coated; and a signal line for headphone detection 25C, wherein the external all of them are covered with a shield wire 27 which is formed by winding soft copper or with a braided structure via an insulation sheet 26 made of paper or vinyl sheet.

And, at one end of this shield cable 20, there is provided the five-pin connector 110A as connected to the central conductor 21 of the coaxial cable 24 and the shield wire 23 thereof, signal lines 25L, 25R for audio signal, and the headphone detection signal wire 25C. Further, at the other end of this shield cable 20, there is provided the connection block 30 as connected to the central conductor 21, the shield wire 23 thereof, the signal lines 25R, 25R for audio signals, the headphone detection signal line 25C, and to the shield wire 27.

Here, it should be noted that although the shield wire 27 which covers the coaxial cable 24, audio signal lines 25L, 25R and the headphone detection signal line 25C is connected to the aforementioned connection block 30, but is not connected to the aforementioned pin 110A.

By way of example, in this preferred embodiment, although the shield wire 23 of the coaxial cable 24 is used as a common grounding wire for the central conductor 21 and the signal lines 25L, 25R for audio signal, it is not limited thereto, and a grounding wire for the signal lines 25L, 25R for audio signal may be provided in addition. Alternatively, in a LCD television receiver 100 which is not provided with a headphone detection unit 126, it may be configured such that the headphone detection signal line 25C is used as a grounding wire for the signal lines 25L, 25R for audio signal.

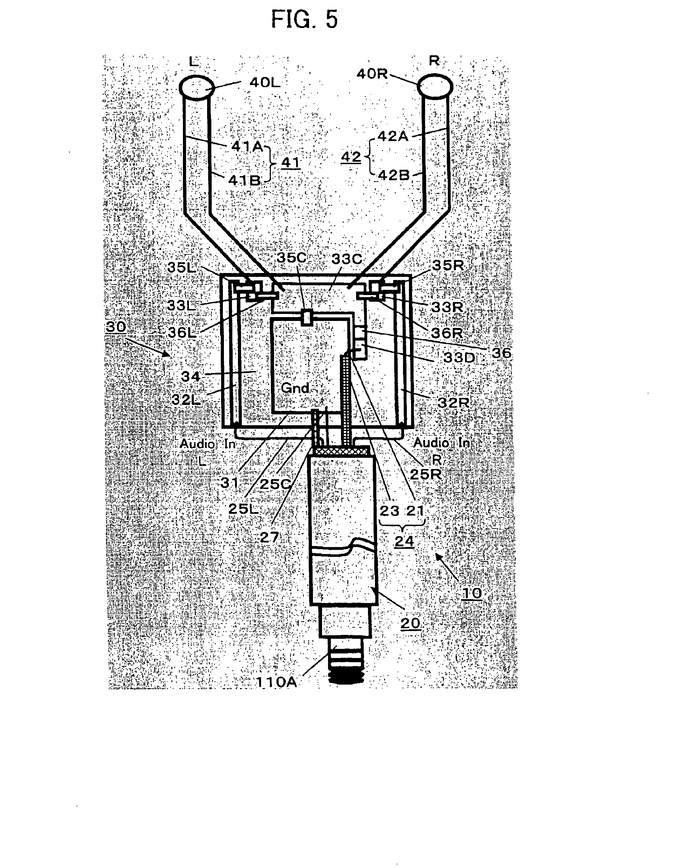

As shown in FIG. 5, the connection block 30 has a substrate 34 on which there are formed a ground pattern 31 in the center thereof, transmission line patterns 32L, 32R for stereophonic audio signals mounted on both sides of the ground pattern 31, three connection lands 33L, 33R, 33C mounted at leading edge portions of the ground pattern 31, and a connection land 33D mounted on one side of the ground pattern 31. On this substrate 34, there are mounted: high frequency chokes 35L, 35R for connecting therethrough the end portions of the transmission line patterns 32L, 32R for the stereophonic audio signals to the first and the second connection lands 33L, 33R among the aforementioned three connection lands 33L, 33R, 33C; a high frequency choke 35C for connecting therethrough the ground pattern 31 to the third connection land 33C among the three connection lands 33L, 33R, 33C; a chip capacitor 36L for connecting therethrough the first connection land 33L and the third connection land 33C; a chip capacitor 36R for connecting therethrough the second connection land 33R and the third connection land 33C; and a chip capacitor 36 for connecting therethrough the third connection land 33C and a fourth connection land 33D.

And, in this connection block 30, a left-side earphone cable 41 including two signal lines 41A, 41B for supplying left channel audio signal to a left-side earphone 40L is connected to the first connection land 33L and the third connection land 33C, further a right-side earphone cable 42 including two signal lines 42A, 42B for supplying right channel audio signal to a right-side earphone 40R is connected to the second connection land 33R and the third connection land 33C.

Also, to this connection block 30, the aforementioned shield cable 20 is connected in such a manner as will be described in the following.

That is, the left side audio signal line 25L and the right side signal line 25R of the shield cable 20 are connected to the transmission line patterns 32L and 32R for audio signal formed on the substrate 34, and further the headphone detection signal line 25C thereof is connected to the ground pattern 31. Further, on the ground pattern 31, the central conductor 21 and the shield wire 23 which make up the axial structure in the shield cable 20 are laid out, and the shield wire 23 is connected to the ground pattern 31, while an end of the central conductor 21 is connected to the fourth connection land 33D. The shield wire 27 is directly connected to GND 31.

By way of example, the chip capacitor 36 for connecting between the third connection land 33C and the fourth connection land 33D therethrough can be substituted with a capacitor for breakdown prevention, which is not shown, to be inserted between the movable terminal 7 and the tuner unit 121. In this case, the end of the central conductor 21 constituting the coaxial structure in the shield cable 20 is directly connected to the third connection land 33C.

Here, in this preferred exemplary embodiment of the invention, as the aforementioned high frequency choke 35L, 35R, 35C there are used ferrite beads, for example, BLM18HD102SN1, size 1608 produced by Murata Manufacturing Ltd. The high frequency chokes 35L, 35R, 35C, which use this ferrite beads, become low impedance to audio signals in a frequency band below 20 kHz, and high impedance to high frequency signals, thereby preventing passage of the high frequency signal. Further, as chip capacitors 36L, 36R, 36C, such ones having capacitance of 10 pF are used respectively, which become high impedance to audio signals in the frequency band below 20 kHz blocking passage of the audio signal, and become low impedance to the high frequency signal.

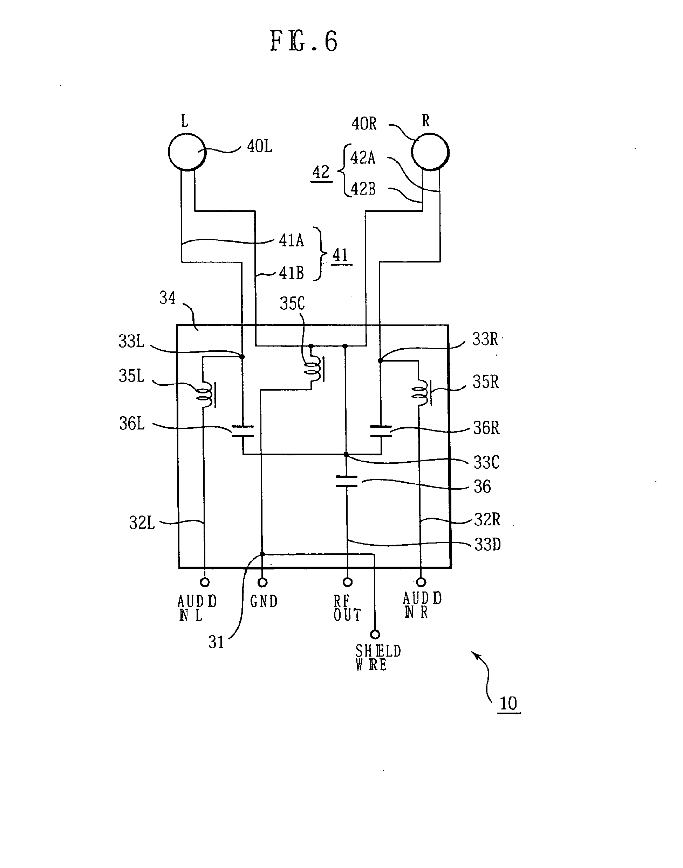

This earphone antenna 10, as indicated in a schematic electrical circuitry diagram shown in FIG. 6, has earphone cables 41, 42 led out from both sides, each including two signal lines 41A, 41B/42A, 42B of the left/right side signal lines and GND, for transmitting audio signals to speakers 40L, 40R of stereophonic earphones, then in order to separate the audio signal and the high frequency signal, it is configured such that high frequency wave chokes 35L, 35R, 35C using the ferrite beads are provided at input portions of the audio signal and at a portion falling to the ground, i.e., at portions of the connection lands 33L, 33R, 33C, which become high impedance (1 kΩ or greater) in the frequency band for use in television broadcasts, and low impedance in the audio frequency band (less than 20 kHz), thereby separating the audio signal and the high frequency signal.

That is, because the earphone cables 41, 42, including two signal lines 41A, 41B/42A, 42B on each side, is connected to the central conductor 21 which is a signal line of the coaxial cable 23 associated with high frequency, therefore, in order to be separated therefrom regarding the audio range, it is configured to connect between the connection lands 33L or 33R and 33C via chip capacitors 36L, 36R of 10 pF, so as to separate the signals in the audio band range, and connect in RF signals (frequency range of television bands).

Here, the frequency bands allocated for use to television broadcasts in Japan are, 90M to 108MHz (1-3 channels) and 170M to 222MHz (4-12 channels) in VHF, and 470M to 770MHz (13-62 channels) in UHF band.

Therefore, according to this earphone antenna 10, by configuring such that the shield wire 27 which covers the coaxial cable 24 and the signal lines 25L, 25R for audio signals is directly connected to GND 31, a sleeve antenna structure is provided to use the earphone cables 41, 42 and the shield wire 27 as an aerial which resonates over its line length, wherein respective lengths thereof are adjusted so as to be able to receive 100MHz in the VHF band.

In the earphone antenna 10 according to this exemplary embodiment of the invention, a characteristic impedance of the coaxial cable 24 is set at 75 Ω, a length of the shield cable 20 at 70 cm, lengths of the earphone cables 41, 42 at 50cm, and it is adjusted so as to resonate at 100 MHz. At 200 MHz, it is configured to be able to receive as 1λ antenna. In UHF, it is configured to make use of harmonic oscillations of 100 MHz and 200 MHz (triple, quintuple, septuple waves).

The earphone antenna 10 according to the embodiment of the invention, because of its sleeve structure, has become stable as an antenna, and further various functions can be added to the connection block 30.

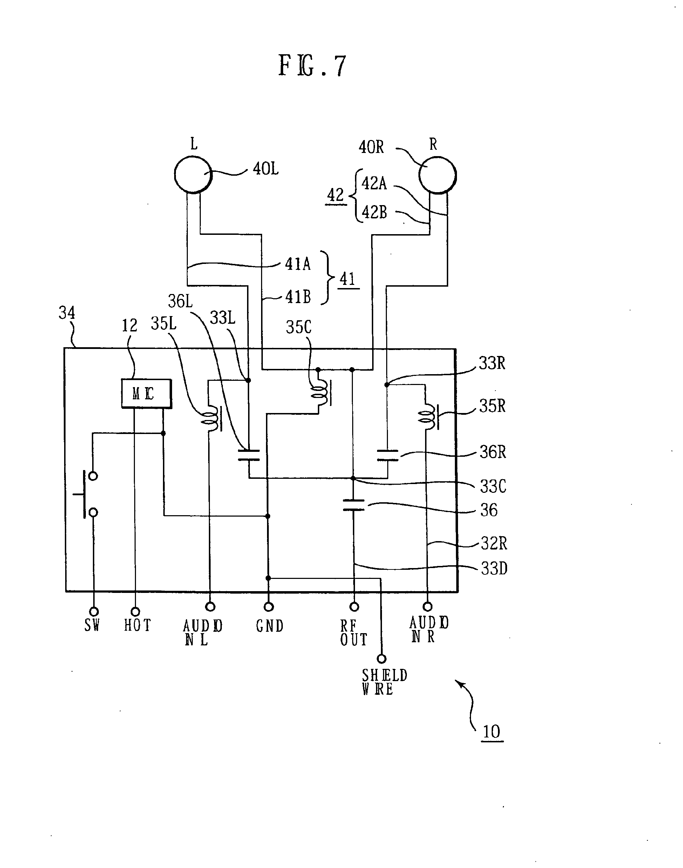

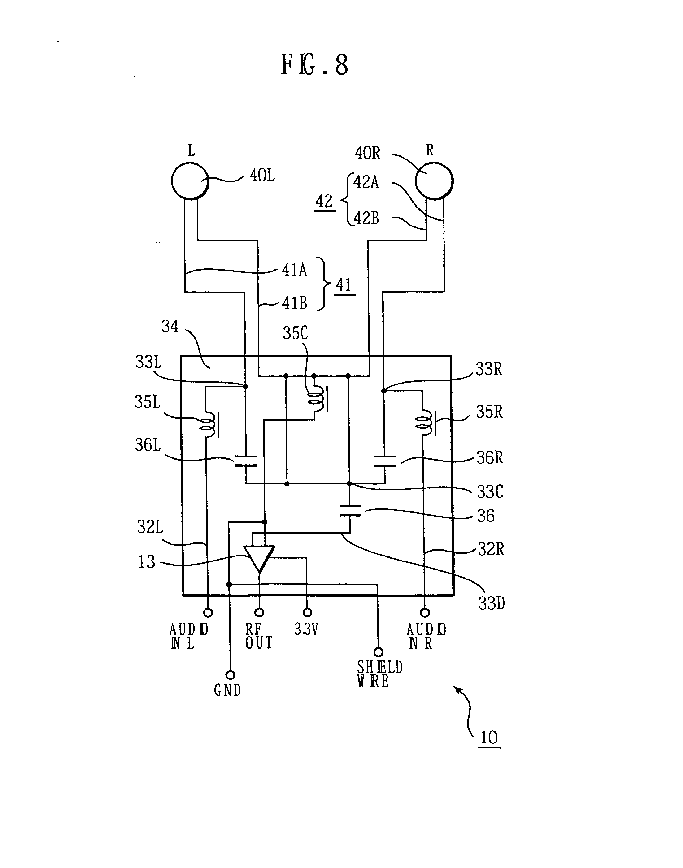

For example, for use in a portable telephone, a function of a microphone 12 can be added thereto without decreasing antenna gain by implementing a circuit configuration as shown in FIG. 7. Also, by adding an amplifier 14 as shown in FIG. 8, it is allowed to place the amplifier 14 in the vicinity of the antenna so as to achieve a significant improvement in NF (noise factor) as a system.

Here, although in the earphone antenna 10 described above, the lengths of the two earphone cables 41, 42 are set equal, it is possible to vary respective lengths of the two earphone cables 41, 42 from the connection lands 33L, 33R, 33C in the connection block 30 to the earphones 40L, 40R, so as to be able to correspond to different frequencies as well.

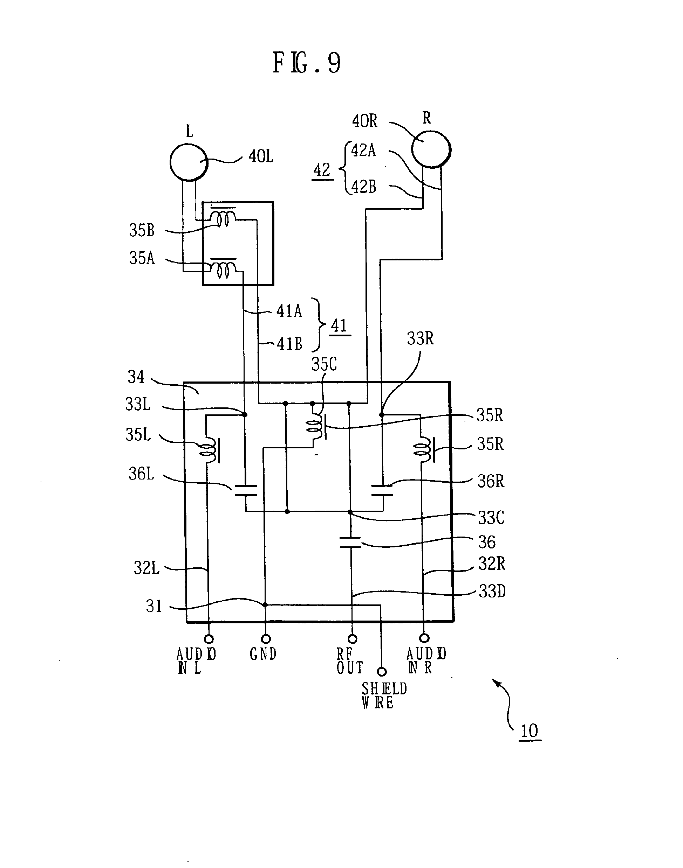

Still further, as an earphone antenna 10A shown in FIG. 9, by inserting high frequency chokes (ferrite beads) 35A, 35B into a portion en route to one of the two earphone cables 41, 42, for example, to the earphone cable 41 for the left side audio signal, it may be configured to separate high frequency signal and shorten its resonance length. In this earphone antenna 10A shown in FIG. 9, it is configured that a resonance length in one earphone antenna 41 is 250 mm while a resonance length in the other earphone antenna 42 is 400 mm, a characteristic impedance of the coaxial cable 24 is 75Ω, and a length of the shield cable 20 is 600 mm. By way of example, in this earphone antenna 10A, the other components are the same as those in the aforementioned earphone antenna 10, therefore, the same components are indicated by the same symbols and numeric as in FIG. 9, omitting detailed description thereof.

Further, the present invention is also applicable to a case of a monophonic earphone where a single earphone cable is used.

## Claims

1. An earphone antenna (10) comprising:
- an earphone cable (41, 42) including a pair of first signal lines (41A, 41B, 42A ,42B) which are insulation-coated for supplying an audio signal to an earphone (40L, 40R);
- a shielded cable (20) including a coaxial cable (24), a second signal line (25L, 25R) for an audio signal which is insulation-coated, and an insulation-coated grounding wire (25C), the coaxial cable (24) having a central conductor (21) for passing a high frequency signal, being coated with an insulator (22) and further covered with a first shield wire (23), the coaxial cable (24), the second signal line (25L, 25R) and the insulation-coated grounding wire (25C) being covered with a second shield wire (27) via an insulation material (26);
- a multipin conncetor (110A) arranged on one end of said shielded cable (20) and adapted to electrically connect the shielded cable (20) to a main body of a radio equipment (100), wherein the second shield wire (27) is not connected to said multipin connector (110A); and
- a connection block (30) which connects the other end of said shielded cable (20) to said earphone cable (41, 42), the connection block (30) including a substrate (34) with a ground (31) formed thereon;
wherein in said connection block (30):
- said grounding wire (25C) is connected to said ground (31), and said pair of first signal lines (41A, 41B, 42A, 42B) of said earphone cable (41, 42) are connected respectively to said second line (25L, 25R) for said audio signal and to said ground (31) via high frequency chokes (35L, 35R, 35C) which become low impedance in the frequency range of said audio signal and high impedance in the frequency range of said high frequency signal, forming thereby audio signal transmission paths (32L, 32R); and
- said said central conductor (21) of said coaxial cable (24) is connected to said pair of first signal lines (41A, 41b, 42A, 42B) of said earphone cable (41, 42) via capacitors (36, 36L,36R) which become high impedance in the frequency range of said audio signal and low impedance in the frequency range of said high frequency signal, and said first shield wire (23) of said coaxial cable (24) and said second shield wire (27) of said shielded cable (20) are connected to said ground (31), forming a sleeve antenna which includes said earphone cable (41, 42) and said second shield wire (27) which covers the external of said coaxial cable (24), said second signal line (25L, 25R) for said audio signal and said grounding wire (25C).

2. An earphone antenna (10) according to claim 1, wherein stereophonic earphones are provided, which are connected to said connection block (30) via a pair of earphone cables (41, 42) by means of said second signal line (25L, 25R), and a high frequency choke (35C) is inserted in a portion in one or both of said earphone cables (41, 42), to alter the resonance frequency of said earphone cables (41, 42).

3. An earphone antenna according to claim 1, wherein a microphone (12) and a switch are mounted in said connection block (30).

4. An earphone antenna according to claim 1, wherein an amplifier (14) is mounted in said connection block (30).

5. A portable radio equipment comprising:
a main body of a radio equipment (100) provided with a multipin jack (110A) which is connected to a tuner and an audio signal output unit; and
an earphone antenna (10) according to at least one of claims 1 to 4.

## Patentansprüche

1. Kopfhörer-Antenne (10), die Folgendes umfasst:
- ein Kopfhörer-Kabel (41, 42), das ein Paar von ersten Signalleitungen (41A, 41B, 42A, 42B) beinhaltet, die isolierbeschichtet sind, um ein Audiosignal an einen Kopfhörer (40L, 40R) zu liefern;
- ein abgeschirmtes Kabel (20), das ein Koaxialkabel (24), eine zweite Signalleitung (25L, 25R), die isolierbeschichtet ist, für ein Audiosignal und einen isolierbeschichteten Massedraht (25C) beinhaltet, wobei das Koaxialkabel (24) einen zentralen Leiter (21) zum Durchleiten von Hochfrequenzsignalen aufweist, das mit einem Isolator (22) beschichtet und ferner mit einem ersten Abschirmdraht (23) bedeckt ist, wobei das Koaxialkabel (24), die zweite Signalleitung (25L, 25R) und der isolierbeschichtete Massedraht (25C) über ein Isolationsmaterial (26) mit einem zweiten Abschirmdraht (27) bedeckt sind;
- ein Mehrkontakt-Stecker (110A), der an einem Ende des abgeschirmten Kabels (20) angeordnet und dafür ausgelegt ist, das abgeschirmte Kabel (20) elektrisch mit einem Hauptkörper einer Funkausrüstung (100) zu verbinden, wobei der zweite Abschirmdraht (27) nicht mit dem Mehrkontakt-Stecker (110A) verbunden ist; und
- ein Verbindungsblock (30), der das andere Ende des abgeschirmten Kabels (20) mit dem Kopfhörer-Kabel (41, 42) verbindet, wobei der Verbindungsblock (30) ein Substrat (34) mit daran angeformter Masse (31) beinhaltet;
wobei in dem Verbindungsblock (30):
- der Massedraht (25C) mit der Masse (31) verbunden ist, und das Paar von ersten Signalleitungen (41A, 41B, 42A, 42B) des Kopfhörer-Kabels (41, 42) jeweils mit der zweiten Signalleitung (25L, 25R) für das Audiosignal und mit der Masse (31) über Hochfrequenz-Drosseln (35L, 35R, 35C) verbunden sind, die im Frequenzbereich des Audiosignals niederohmig und im Frequenzbereich des Hochfrequenzsignals hochohmig werden und dadurch Audiosignal-Übertragungswege (32L, 32R) bilden; und
- der zentrale Leiter (21) des Koaxialkabels (24) mit dem Paar von ersten Signalleitungen (41A, 41B, 42A, 42B) des Kopfhörer-Kabels (41, 42) über Kondensatoren (36, 36L, 36R) verbunden ist, die im Frequenzbereich des Audiosignals hochohmig und im Frequenzbereich des Hochfrequenzsignals niederohmig werden und der erste Abschirmdraht (23) des Koaxialkabels (24) und der zweite Abschirmdraht (27) des abgeschirmten Kabels (20) mit der Masse (31) verbunden sind, wobei eine Koaxial-Dipol-Antenne gebildet wird, die das Kopfhörer-Kabel (41, 42) und den zweiten Abschirmdraht (27), der das Äußere des Koaxialkabels (24), die zweite Signalleitung (25L, 25R) für das Audiosignal und den Massedraht (25C) abdeckt, beinhaltet.

2. Kopfhörer-Antenne (10) nach Anspruch 1, wobei stereophonische Kopfhörer bereitgestellt sind, die mit dem Verbindungsblock (30) über ein Paar von Kopfhörer-Kabeln (41, 42) mittels der zweiten Signalleitung (25L, 25R) verbunden sind, und wobei eine Hochfrequenz-Drossel (35C) in einem Teil in einem oder in beiden der Kopfhörer-Kabel (41, 42) eingesetzt ist, um die Resonanzfrequenz der Kopfhörer-Kabel (41, 42) zu verändern.

3. Kopfhörer-Antenne nach Anspruch 1, wobei ein Mikrofon (12) und ein Schalter in dem Verbindungsblock (30) eingebaut sind.

4. Kopfhörer-Antenne nach Anspruch 1, wobei ein Verstärker (14) in dem Verbindungsblock (30) eingebaut ist.

5. Tragbare Funkausrüstung, die Folgendes umfasst:
einen Hauptkörper einer Funkausrüstung (100), der mit einer Mehrkontakt-Buchse (110A) versehen ist, die mit einem Funkempfänger und einer Audiosignal-Ausgabeinheit verbunden ist; und eine Kopfhörer-Antenne (10) nach mindestens einem der Ansprüche 1 bis 4.

## Revendications

1. Antenne sur écouteur (10) comprenant :
- un câble d'écouteur (41, 42) comportant une paire de premières lignes de signaux (41A, 41B, 42A, 42B) qui sont revêtues d'isolant pour délivrer un signal audio à un écouteur (40L, 40R) ;
- un câble blindé (20) comportant un câble coaxial (24), une seconde ligne de signal (25L, 25R) destinée à un signal audio, qui est revêtue d'isolant, et un conducteur de masse revêtu d'isolant (25C), le câble coaxial (24) ayant un conducteur central (21) destiné à laisser passer un signal à haute fréquence, qui est revêtu d'un isolant (22) et est en outre recouvert d'un premier conducteur de blindage (23), le câble coaxial (24), la seconde ligne de signal (25L, 25R) et le conducteur de masse revêtu d'isolant (25C) étant recouverts d'un second conducteur de blindage (27) avec interposition d'un matériau isolant (26) ;
- un connecteur multibroches (110A) disposé sur une extrémité dudit câble blindé (20) et apte à connecter électriquement le câble blindé (20) à un corps principal d'un équipement radio (100), dans lequel le second conducteur de blindage (27) n'est pas connecté audit connecteur multibroches (110A) ; et
- un bloc de connexion (30) qui connecte l'autre extrémité dudit câble blindé (20) audit câble d'écouteur (41, 42), le bloc de connexion (30) comportant un substrat (34) sur lequel est formée une masse (31) ;
dans laquelle, dans ledit bloc de connexion (30) :
- ledit conducteur de masse (25C) est connecté à ladite masse (31) et ladite paire de premières lignes de signaux (41A, 41B, 42A, 42B) dudit câble d'écouteur (41, 42) est respectivement connectée à ladite seconde ligne (25L, 25R) destinée audit signal audio et à ladite masse (31) par l'intermédiaire de bobines d'arrêt à haute fréquence (35L, 35R, 35C) dont l'impédance est plus faible dans la gamme de fréquences dudit signal audio et dont l'impédance est plus élevée dans la gamme de fréquences dudit signal à haute fréquence, pour former ainsi des trajets de transmission de signaux audio (32L, 32R) ; et
- ledit conducteur central (21) dudit câble coaxial (24) est connecté à ladite paire de premières lignes de signaux (41A, 41b, 42A , 42B) dudit câble d'écouteur (41, 42) par l'intermédiaire de condensateurs (36, 36L, 36R) dont l'impédance est plus élevée dans la gamme à haute fréquence dudit signal audio et dont l'impédance est plus faible dans la gamme de fréquences dudit signal à haute fréquence, et ledit premier conducteur de blindage (23) dudit câble coaxial (24) et ledit second conducteur de blindage (27) dudit câble blindé (20) sont connectés à ladite masse (31), en formant une antenne-manchon qui comporte ledit câble d'écouteur (41, 42) et ledit second conducteur de blindage (27) qui recouvre l'extérieur dudit câble coaxial (24), de ladite seconde ligne de signal (25L, 25R) destinée audit signal audio et dudit conducteur de masse (25C).

2. Antenne sur écouteur (10) selon la revendication 1, dans laquelle il est prévu des écouteurs stéréophoniques qui sont connectés audit bloc de connexion (30) par l'intermédiaire d'une paire de câbles d'écouteur (41, 42) au moyen de ladite seconde ligne de signal (25L, 25R), et une bobine d'arrêt à haute fréquence (35C) est insérée dans une partie de l'un ou des deux desdits câbles d'écouteur (41, 42), afin de modifier la fréquence de résonance desdits câbles d'écouteur (41, 42).

3. Antenne sur écouteur selon la revendication 1, dans laquelle un microphone (12) et un commutateur sont montés dans ledit bloc de connexion (30).

4. Antenne sur écouteur selon la revendication 1, dans laquelle un amplificateur (14) est monté dans ledit bloc de connexion (30).

5. Equipement radio portable comprenant :
un corps principal d'un équipement radio (100) muni d'une fiche à multibroches (110A) qui est connectée à un syntoniseur et à une unité de sortie de signal audio ; et
une antenne sur écouteur (10) selon au moins l'une des revendications 1 à 4.
